# EUROPEAN PATENT APPLICATION

(11) **EP 4 456 411 A2**
(43) Date of publication of application: **30.10.2024**
(21) Application number: 24172278.4
(22) Date of filing: 24.04.2024
(51) Int. Cl.: H02P 9/30

(54) **ENGINE START SYSTEM WITH EXCITER**

(30) Priority: 26.04.2023 US 202318307492
(71) Applicant: Hamilton Sundstrand Corporation, Charlotte, NC 28217-4578 (US)
(72) Inventor: PATEL, Dhaval S., Loves Park 61111 (US); KOENIG, Andreas C., Rockford, IL 61107 (US)
(74) Representative: Dehns

(57) **Abstract**

An electric engine start architecture is provided and includes a motor controller (110) including an exciter inverter (111) and a controller (112), which outputs a control signal to the exciter inverter (111), and a generator (120). The generator (120) includes an exciter (121) receptive of alternating current (AC) from the exciter inverter (111) with the exciter inverter (111) responsive to the control signal, a rotating rectifier receptive of AC from the exciter (121) and configured to convert the AC from the exciter (121) into direct current (DC) and a main machine (123) exclusively drivable by AC fields in the exciter (121) to execute an engine start operation.

## Description

### BACKGROUND

The present disclosure relates to an engine start system and, in particular, to an electric engine start system with an exciter.

In aircraft technologies, electric starting can be used to induce rotation of a rotor within aircraft engines. Electric engine starting tends to provide a versatile method for engine starting and offers several advantages. For large engines, the advantages include elimination of bleed air systems and duct work, elimination of an air turbine starter and allowing for a low-speed operation of aircraft engines for maintenance, fuel purging and bowed rotor conditions. For small engines, the advantages include elimination of a DC starter, associated wiring and the drive gearing for the DC starter in the gearbox.

### SUMMARY

According to an aspect of the disclosure, an electric engine start architecture is provided and includes a motor controller including an exciter inverter and a controller, which outputs a control signal to the exciter inverter, and a generator. The generator includes an exciter receptive of alternating current (AC) from the exciter inverter with the exciter inverter responsive to the control signal, a rotating rectifier receptive of AC from the exciter and configured to convert the AC from the exciter into direct current (DC) and a main machine exclusively drivable by AC fields in the exciter to execute an engine start operation.

In accordance with additional or alternative embodiments, the motor controller is air-cooled.

In accordance with additional or alternative embodiments, the motor controller is receptive of DC from one or more of aircraft batteries and a grid.

In accordance with additional or alternative embodiments, the exciter exclusively produces about 3.39-20.34 newton meter (2.5-15 ft-lbs of torque for the engine start operation.

In accordance with additional or alternative embodiments, the exciter exclusively produces up to about 40.67 newton meter (30 ft-lbs) of torque for the engine start operation.

In accordance with additional or alternative embodiments, the exciter is controlled according to a volts-per-Hertz algorithm.

In accordance with additional or alternative embodiments, the exciter includes an induction machine operating at a slip.

According to an aspect of the disclosure, an electric engine start architecture is provided and includes an aircraft direct current (DC) bus, a generator control unit (GCU) and a generator. The GCU includes an exciter inverter receptive of DC from the aircraft DC bus and configured to generate alternating current (AC) therefrom and a controller receptive of DC from the aircraft DC bus and configured to output a control signal to the exciter inverter. The generator includes an exciter receptive of AC from the exciter inverter with the exciter inverter being responsive to the control signal, a rotating rectifier receptive of AC from the exciter and configured to convert the AC from the exciter into direct current (DC) and a main machine exclusively drivable by AC fields in the exciter to execute an engine start operation.

In accordance with additional or alternative embodiments, the GCU is air-cooled.

In accordance with additional or alternative embodiments, the exciter inverter and the controller are receptive of the DC from one or more of aircraft batteries and a grid via the aircraft bus.

In accordance with additional or alternative embodiments, the exciter inverter provides three-phase excitation during the engine start operation.

In accordance with additional or alternative embodiments, the exciter inverter is utilized as a DC-DC converter during a generator mode of operation.

In accordance with additional or alternative embodiments, the exciter exclusively produces about 3.39-20.34 newton meter (2.5-15 ft-lbs) of torque for the engine start operation.

In accordance with additional or alternative embodiments, the exciter exclusively produces up to about 40.67 newton meter (30 ft-lbs) of torque for the engine start operation.

In accordance with additional or alternative embodiments, the exciter is controlled according to a volts-per-Hertz algorithm.

In accordance with additional or alternative embodiments, the exciter includes an induction machine operating at a slip.

According to an aspect of the disclosure, an electric engine start architecture for a generator mode of operation is provided. The electric engine start architecture includes a generator load, a permanent magnet generator (PMG), a generator control unit (GCU) and a generator. The GCU includes a rectifier receptive of alternating current (AC) from the PMG and configured to generate direct current (DC) therefrom, an exciter drive receptive of DC from the rectifier and a controller receptive of DC from the rectifier and configured to output a control signal to the exciter drive. The generator includes an exciter receptive of DC from the exciter drive with the exciter drive being responsive to the control signal, a rotating rectifier receptive of AC from the exciter and configured to convert the AC from the exciter into DC and a main machine drivable by AC fields in the exciter to generate AC for the generator load.

In accordance with additional or alternative embodiments, the GCU is air-cooled.

In accordance with additional or alternative embodiments, high-voltage and low-voltage protection units are interposed between the rectifier and the controller.

In accordance with additional or alternative embodiments, the exciter drive is utilized as a DC-DC converter.

Additional features and advantages are realized through the techniques of the present disclosure. Other embodiments and aspects of the disclosure are described in detail herein and are considered a part of the claimed technical concept. For a better understanding of the disclosure with the advantages and the features, refer to the description and to the drawings.

### BRIEF DESCRIPTION OF THE SEVERAL VIEWS OF THE DRAWINGS

For a more complete understanding of this disclosure, reference is now made to the following brief description, taken in connection with the accompanying drawings and detailed description, wherein like reference numerals represent like parts:
FIG. 1 is schematic diagram of an electric engine start architecture in accordance with embodiments;
FIG. 2 is schematic diagram of an electric engine start architecture with an aircraft bus in accordance with embodiments
FIG. 3 is a schematic diagram of an electric engine start architecture for a generator mode of operation in accordance with embodiments.

### DETAILED DESCRIPTION

Electric engine start is a feasible technology for architectures where the engine start power requirements are lower than the power generation requirements. This has made electric engine start highly desirable for wide-body commercial aircraft and military aircraft. This is because, in the cases of wide-body commercial aircraft and military aircraft, electric engine start capability eliminates bleed air systems and, in some cases, drives generator size.

Another reason why electric engine start can be favored for wide-body and military markets is that higher start power systems drive liquid cooled starter/motor controllers. The wide-body market in particular can support the liquid cooled starter/motor controller because of available space and the ability to multiplex the controller to support engine start, air management systems and hydraulic pumps. This allows for a common motor controller resulting in an overall smaller package. The military market supports liquid cooled systems because the cooling medium is fuel, and the fuel needs to be heated prior to injection in the engine.

For auxiliary power systems (APUs) and smaller engines, the start torque requirements tend to be extremely low and can be on the order of 3.39-20.34 newton meter (2.5-15 ft-lbs) of torque (much less than the 135.58-203.37 newton meter (100-150 ft-lbs) of torque required in wide-body and military applications). This is because APU systems do not provide thrust, so the engine tends to be provided as a single stage fan/compressor. The APU's functions are typically to provide bleed air and electric power via a generator, which, in turn, can be utilized to provide electric power to enable electric start for the main engine(s). The problem with existing systems is that the systems require motor controllers for both torque production and excitation of the main field, leading to a large motor controller.

Thus, as will be described below, electric engine start is provided for an aircraft where the generator mode power is greater than the start power and utilizes the exciter only to provide torque during the start mode. The exciter for starters is traditionally a three-phase wound rotor induction machine. The rotor of the induction machine is connected to the rotating rectifier to energize the main field. During the start mode, the exciter provides torque because it is an induction machine operating at a slip. A small motor controller or a GCU with an inverter for a driver can be utilized to provide excitation.

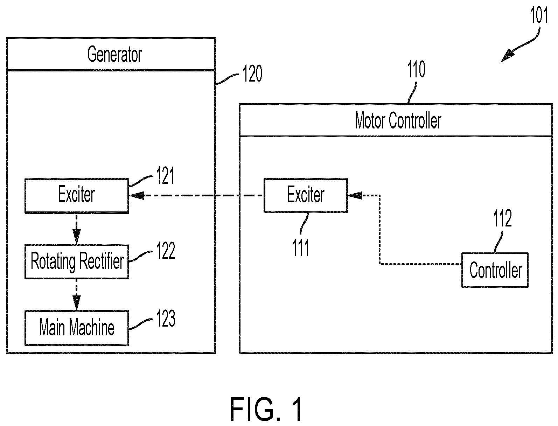

With reference to FIG. 1, an electric engine start architecture 101 is provided and includes a motor controller 110 and a generator 120. The motor controller 110 includes an exciter inverter 111 and a controller 112 and can be receptive of direct current (DC) from one or more of aircraft batteries and a grid. The controller 112 is configured to output a control signal to the exciter inverter 111. The motor controller 110 can have a relatively small size and weight and can therefore be air-cooled due to its relatively low loss. The generator 120 includes an exciter 121, a rotating rectifier 122 and a main machine 123. The exciter 121 includes or is provided as an induction machine operating at a slip and is receptive of alternating current (AC) from the exciter inverter 111 with the exciter inverter 111 being responsive to the control signal from the controller 112. The rotating rectifier 122 is receptive of AC from the exciter 121 and is configured to convert the AC from the exciter 121 into DC. The main machine 123 can be exclusively driven by AC fields in the exciter 121 to execute a start operation using power of the exciter 121. The power of the exciter 121 can be adjusted to compensate for drag of the rotating rectifier 122 and a rotor of the main machine 123. With the electric engine start architecture 101 configured in this manner, the exciter 121 can be operated and controlled according to a volts-per-Hertz algorithm and exclusively produces about 5-15 ft-lbs of torque or up to about 30 ft-lbs of torque for the engine start operation.

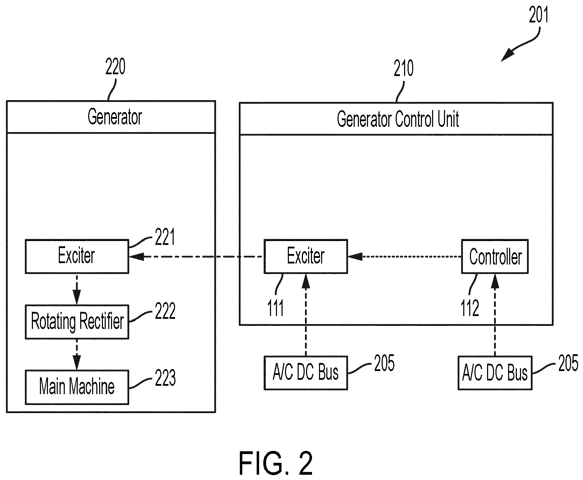

With reference to FIG. 2, an electric engine start architecture 201 is provided and includes an aircraft DC bus 205, a generator control unit (GCU) 210 and a generator 220. The GCU 210 includes an exciter inverter 211 and a controller 212. The exciter inverter 211 is receptive of DC from the aircraft DC bus 205 and is configured to generate AC therefrom. The controller 212 is receptive of DC from the aircraft DC bus 205 and is configured to output a control signal to the exciter inverter 211. The GCU 210 can have a relatively small size and weight and can therefore be air-cooled due to its relatively low loss. The generator 220 includes an exciter 221, a rotating rectifier 222 and a main machine 223. The exciter 221 includes or is provided as an induction machine operating at a slip and is receptive of AC from the exciter inverter 211 with the exciter inverter 211 being responsive to the control signal from the controller 212. The rotating rectifier 222 is receptive of AC from the exciter 221 and is configured to convert the AC from the exciter 221 into DC. The main machine 223 can be exclusively driven by AC fields in the exciter 221 to execute a start operation using power of the exciter 221. The power of the exciter 221 can be adjusted to compensate for drag of the rotating rectifier 222 and a rotor of the main machine 223. With the electric engine start architecture 201 configured in this manner, the exciter 221 can be operated and controlled according to a volts-per-Hertz algorithm and exclusively produces about 5-15 ft-lbs of torque or up to about 30 ft-lbs of torque for the engine start operation.

In accordance with embodiments, the exciter inverter 211 can provide three-phase excitation during the engine start operation or can be utilized as a DC-DC converter during a generator mode of operation.

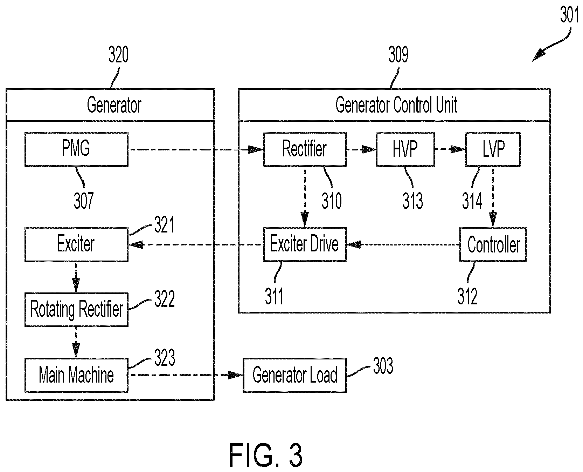

With reference to FIG. 3, an electric engine start architecture 301 for a generator mode of operation is provided and includes a generator load 303, a permanent magnet generator (PMG) 307, a GCU 309 and a generator 320. The GCU 309 includes a rectifier 310, an exciter drive 311 and a controller 312. The rectifier 310 is receptive of AC from the PMG 307 and is configured to generate DC therefrom. The exciter drive 311 is receptive of DC from the rectifier 310. The controller 312 is receptive of DC from the rectifier 310 and is configured to output a control signal to the exciter drive 311. The GCU 309 can have a relatively small size and weight and can therefore be air-cooled due to its relatively low loss. The GCU 309 can further include high-voltage and low-voltage protection units 313 and 314 interposed between the rectifier 310 and the controller 312. The generator 320 includes an exciter 321, a rotating rectifier 322 and a main machine 323. The exciter 321 includes or is provided as an induction machine operating at a slip and is receptive of DC from the exciter drive 311 with the exciter drive 311 being responsive to the control signal from the controller 312. The rotating rectifier 322 is receptive of AC from the exciter 321 and is configured to convert the AC from the exciter 321 into DC. The main machine 323 can be exclusively driven by AC fields in the exciter 321. The power of the exciter 321 can be adjusted to compensate for drag of the rotating rectifier 322 and a rotor of the main machine 323. The main machine 323 can then be used to generate AC for the generator load 303. With the electric engine start architecture 301 configured in this manner, the exciter drive 311 can be operated and controlled as a DC-DC converter for the generator mode of operation.

Technical effects and benefits of the present disclosure are the provision of an electric engine start architecture that eliminates the need for a large motor controller to power the main machine and that eliminates the need for a position sensor. The resulting motor controller or the generator control unit (GCU), whichever is used, can be air-cooled. The electric engine start architecture also provides for simplification of a control strategy (going from vector control to volt/Hz) and allows for elimination of a dedicated start-only motor and the associated wiring, control relay and drive gears in the gearbox.

The corresponding structures, materials, acts, and equivalents of all means or step-plus function elements in the claims below are intended to include any structure, material, or act for performing the function in combination with other claimed elements as specifically claimed. The description of the present disclosure has been presented for purposes of illustration and description, but is not intended to be exhaustive or limited to the technical concepts in the form disclosed. Many modifications and variations will be apparent to those of ordinary skill in the art without departing from the scope of the disclosure. The embodiments were chosen and described in order to best explain the principles of the disclosure and the practical application, and to enable others of ordinary skill in the art to understand the disclosure for various embodiments with various modifications as are suited to the particular use contemplated.

While the preferred embodiments to the disclosure have been described, it will be understood that those skilled in the art, both now and in the future, may make various improvements and enhancements which fall within the scope of the claims which follow. These claims should be construed to maintain the proper protection for the disclosure first described.

## Claims

1. An electric engine start architecture, comprising:
a motor controller (110) comprising an exciter inverter (111) and a controller (112), which outputs a control signal to the exciter inverter (111); and
a generator (120) comprising:
an exciter (121) receptive of alternating current (AC) from the exciter inverter (111) with the exciter inverter (111) responsive to the control signal;
a rotating rectifier receptive of AC from the exciter (121) and configured to convert the AC from the exciter (121) into direct current (DC); and
a main machine (123) exclusively drivable by AC fields in the exciter (121) to execute an engine start operation.

2. The electric engine start architecture according to claim 1, wherein the motor controller (110) is air-cooled.

3. The electric engine start architecture according to claim 1 or 2, wherein the motor controller (110) is receptive of DC from one or more of aircraft batteries and a grid.

4. The electric engine start architecture according to any preceding claim, wherein the exciter (121) exclusively produces about 3.39-20.34 newton meter (2.5-15 ft-lbs) of torque for the engine start operation; or
wherein the exciter (121) exclusively produces up to about 40.67 newton meter (30 ft-lbs) of torque for the engine start operation.

5. The electric engine start architecture according to any preceding claim, wherein the exciter (121) is controlled according to a volts-per-Hertz algorithm.

6. The electric engine start architecture according to any preceding claim, wherein the exciter (121) comprises an induction machine operating at a slip.

7. An electric engine start architecture, comprising:
an aircraft direct current (DC) bus (205);
a generator control unit (GCU) comprising:
an exciter inverter (211) receptive of DC from the aircraft DC bus and configured to generate alternating current (AC) therefrom; and
a controller (212) receptive of DC from the aircraft DC bus and configured to output a control signal to the exciter inverter (211); and
a generator (220) comprising:
an exciter (221) receptive of AC from the exciter inverter (211) with the exciter inverter (211) being responsive to the control signal;
a rotating rectifier receptive of AC from the exciter (221) and configured to convert the AC from the exciter (221) into direct current (DC); and
a main machine (223) exclusively drivable by AC fields in the exciter (221) to execute an engine start operation.

8. The electric engine start architecture according to claim 7, wherein the GCU is air-cooled.

9. The electric engine start architecture according to claim 7 or 8, wherein the exciter inverter (211) and the controller (212) are receptive of the DC from one or more of aircraft batteries and a grid via the aircraft bus; and/or wherein the exciter inverter (211) provides three-phase excitation during the engine start operation.

10. The electric engine start architecture according to any of claims 7-9, wherein the exciter inverter (211) is utilized as a DC-DC converter during a generator mode of operation.

11. The electric engine start architecture according to any of claims 7-10, wherein the exciter (221) exclusively produces about 3.39-20.34 newton meter (2.5-15 ft-lbs) of torque for the engine start operation; or
wherein the exciter (221) exclusively produces up to about 40.67 newton meter (30 ft-lbs) of torque for the engine start operation.

12. The electric engine start architecture according to any of claims 7-11, wherein the exciter (221) is controlled according to a volts-per-Hertz algorithm.

13. The electric engine start architecture according to any of claims 7-12, wherein the exciter (221) comprises an induction machine operating at a slip.

14. An electric engine start architecture for a generator mode of operation, comprising:
a generator load;
a permanent magnet generator (PMG) (307);
a generator control unit (GCU) (309) comprising:
a rectifier (310) receptive of alternating current (AC) from the PMG and configured to generate direct current (DC) therefrom,
an exciter drive (311) receptive of DC from the rectifier; and
a controller (312) receptive of DC from the rectifier and configured to output a control signal to the exciter drive (311); and
a generator (320) comprising:
an exciter (321) receptive of DC from the exciter drive (311) with the exciter drive (311) being responsive to the control signal;
a rotating rectifier receptive of AC from the exciter (321) and configured to convert the AC from the exciter (321) into DC; and
a main machine (323) drivable by AC fields in the exciter (321) to generate AC for the generator load.

15. The electric engine start architecture according to claim 14, wherein the GCU is air-cooled; and/or further comprising high-voltage and low-voltage protection units interposed between the rectifier and the controller (312); and/or wherein the exciter drive (311) is utilized as a DC-DC converter.
